# EUROPÄISCHE PATENTANMELDUNG

(11) **EP 2 186 841 A1**
(43) Veröffentlichungstag der Anmeldung: **19.05.2010**
(21) Anmeldenummer: 08019884.9
(22) Anmeldetag: 14.11.2008
(51) Int. Cl.: C08G 18/08, C08G 18/34

(54) **Vernetzbare Polyurethan-Dispersionen**

(71) Anmelder: Bayer MaterialScience AG, 51368 Leverkusen (DE)
(72) Erfinder: Blum, Harald, Dr., 97840 Hafenlohr (DE); Büchner, Jörg, 51467 Bergisch Gladbach (DE); Henning, Wolfgang, Dr., 51515 Kürten (DE)

(57) **Zusammenfassung**

Die Erfindung betrifft wässrige, vernetzbare Dispersionen auf Basis von Polyurethan- bzw. Polyurethan-Harnstoffen, ein Verfahren zu deren Herstellung, sowie die Verwendung.

## Beschreibung

Die Erfindung betrifft wässrige, vernetzbare Dispersionen auf Basis von Polyurethan- bzw. Polyurethan-Harnstoffen, ein Verfahren zu deren Herstellung, sowie die Verwendung.

Vernetzbare wässrige Polyurethan- bzw. Polyurethan-Polyharnstoff-Dispersionen für Lack-, Dichtstoff- und Klebstoffanwendungen sind bekannt. Bei der Verwendung solcher Dispersionen z.B. für Klebstoffe zum Kleben von Substraten wird häufig nach dem Thermoaktivierverfahren gearbeitet. Hierbei wird die Dispersion auf das Substrat aufgebracht, nach vollständiger Verdunstung des Wassers wird die Klebstoffschicht durch Erwärmen, z. B. mit einem Infrarotstrahler, aktiviert und in einen klebfähigen Zustand überführt. Die Temperatur, bei der der Klebstofffilm klebrig wird, bezeichnet man als Aktiviertemperatur.

Zur Verbesserung der Klebeeigenschaften werden z.B. hydroxyfunktionelle Polyurethan- bzw. Polyurethan-Polyharnstoff-Dispersionen mit isocyanatfunktionellen Vernetzern kombiniert. Das führt in aller Regel zu guten Klebeeigenschaften. Solche Klebstoffe auf Basis von wässrigen Polyurethan- bzw. Polyurethan-Polyharnstoff-Dispersionen, welche für die Anwendung des Thermoaktivierverfahrens geeignet sind, werden z.B. in der US-A 4 870 129 beschrieben. Nachteilig bei solchen Kombinationen ist die relativ kurze Verarbeitungszeit von in der Regel nur einigen Stunden, bedingt durch die Reaktion des Polyisocyanatvernetzers mit dem Wasser.

Bekannt ist auch die Kombination von carboxylatfunktionellen Dispersionen mit carbodiimidfunktionellen Vemetzem. Solche Bindemittel werden z.B. in DE-A 199 5 4 500, DE-A 44 10 557 oder EP-A 792 908 beschrieben. Die Dispersionen enthalten Carboxylatgruppen, die für die Dispergierbarkeit der Polyurethane erforderlich sind. Üblicherweise werden die Carboxylatgruppen durch Verwendungen bzw. Einbau von Dimethylolpropionsäure und Neutralisation der Carboxylgruppe z.B. mit flüchtigen Aminen in die Polymere eingebaut. Die Reaktivität und die Eigenschaften solcher Bindemittelmischungen reichen jedoch häufig nicht aus, um gestiegenen Anforderungen, insbesondere bei Verwendung in oder als hochwertiger Klebstoff, gerecht zu werden.

US5066705 beschreibt wässrige Schutzlacke für Kunststoffsubstrate auf Basis von carboxylfunktionellen Polymerisaten, carboxylfunktionellen Polyurethanen und Polycarbodiimiden. Sowohl Polymerisat als auch Polyurethan weisen sehr hohe Säurezahlen auf, was für viele Anwendungen nachteilig sein kann. Höhere Mengen an Carboxylgruppen können z.B. dazu führen, das eine zu hohe Hydrophilie im Film verbleibt, was zu eine Empfindlichkeit gegenüber Wasser oder anderen Substanzen führt. Zum Einbau der Carboxylgruppen in die Polyurethandispersion werden Dimethylolpropionsäure oder carboxyfunktionelle Polyester eingesetzt, beides führt zu sterisch behinderten Carboxylgruppen, die einer Vernetzungsreaktion nicht optimal zugänglich sind.

EP 1272588 beschreibt eine Klebstoffkomposition , bestehend aus eine komplexen Mischung aus mindestens einer kristallisierenden Polyester-Polyurethan-Dispersion, einem Polyacrylatcopolymer, einer Polychloroprendispersion , einem wärmehärtbaren Harz und einem geeigneten Stabilisatorsystem bestehend aus Aminoalkohol, einem Carbodiimid und Magnesiumoxid, wobei das Stabilisatorsystem die Funktion hat, u.a. die Hydrolyse der Polyesters zu unterdrücken und das System stabil zu halten. Für praktische Anwendungen ist solch ein Vielstoffsystem viel zu aufwendig und störungsanfällig, eine Vernetzungsreaktion im eigentlichen Sinne findet nicht statt.

Die Aufgabe der vorliegenden Erfindung bestand somit in der Bereitstellung von wässrigen, vernetzbaren Dispersionen auf Basis von Polyurethan- bzw. Polyurethan-Harnstoffen, die zur Herstellung von qualitativ hochwertigen Lacken, Dichtstoffen und insbesondere Klebstoffen geeignet sind, eine gute Reaktivität aufweisen und lange Verarbeitungszeiten ermöglichen.

Im Folgenden wird der Begriff Polyurethan bzw. Polyurethan-Dispersion auch als Synonym für Polyurethan und/oder Polyharnstoff und Polyurethan- und/oder Polyurethan-Polyharnstoff-Dispersion verwendet.

Überraschend wurde nun gefunden, dass die nachstehend beschriebenen, vernetzbaren wässrigen Polyurethan- bzw. Polyurethan-Polyharnstoff-Dispersionen sich gegebenenfalls in Kombination mit Vernetzern als hochwertige Lacke, Dichtstoffe und insbesondere Klebstoffe eignen, eine sehr lange Verarbeitungszeit aufweisen und zu hochwertigen, vernetzten Klebungen, Lacken bzw. Dichtstoffen führen.

Gegenstand der vorliegenden Erfindung sind wässrige Polyurethan- bzw. Polyurethan-Harnstoff-Dispersionen umfassend darin dispergierte Polyurethane bzw. Polyurethan-Polyharnstoffe mit endständigen Carboxylgruppen und zusätzlich seitenständigen Sulphonat- und/oder Carboxylatgruppen.

Die erfindungsgemäßen Polyurethan-Dispersionen zeigen bereits bei relativ niedrigen Konzentrationen an endständigen Carboxylgruppen sehr gute Vernetzungseigenschaften in Kombination mit carboxylreaktiven Vernetzern und ermöglichen z.B. in Kombination mit Polycarbodiimiden die Herstellung hochwertiger Verklebungen, wobei die Bindemittelkombinationen sehr lange Verarbeitungszeiten von etlichen Tagen bis zu mehreren Monaten aufweisen.

In einer bevorzugten Ausführungsform der Erfindung haben die in den erfindungsgemäßen Dispersionen enthaltenen Polyurethane bzw. Polyurethan-Polyharnstoffe neben den endständigen Carboxylgruppen zusätzlich Sulphonatgruppen, welche zu mindestens 70 mol%, bevorzugt zu 100 mol% bezogen auf den Gehalt an Sufonatgruppen seitenständig sind.

In einer ebenfalls bevorzugten Ausführungsform der Erfindung haben die in den erfindungsgemäßen Dispersionen enthaltenen Polyurethane bzw. Polyurethan-Polyharnstoffe neben den endständigen Carboxylgruppen zusätzlich zusätzlich Carboxylatgruppen, welche zu mindestens 50 %, bevorzugt zu 70% und besonders bevorzugt zu 100% seitenständig sind.

In einer weiteren bevorzugten Ausführungsform der Erfindung haben die in den erfindungsgemäßen Dispersionen enthaltenen Polyurethane bzw. Polyurethan-Polyharnstoffe neben den endständigen Carboxylgruppen zusätzlich Carboxylat- und Sulphonatgruppen, welche zu mindestens 50 %, bevorzugt zu 70% und besonders bevorzugt zu 100% seitenständig sind.

Die in den erfindungsgemäßen wässrigen Polyurethan- bzw. Polyurethan-Harnstoff-Dispersionen enthaltenen Polyurethane bzw. Polyurethan-Polyharnstoffe sind typischerweise Umsetzungsprodukte aus
a) mindestens einer Sulphonat- und/oder Carboxylatgruppen aufweisenden Komponente, welche außerdem zwei bzw. drei isocyanatreaktive Hydroxy- und/oder Aminogruppen aufweist und somit zu seitenständigen Sulphonat- bzw. Carboxylatstruktureinheiten führt,
b) mindestens einer Diol- und/oder Polyolkomponente,
c) mindestens einer Di- und/oder Polyisocyanatkomponente,
d) mindestens einer Aminocarbonsäure und/oder Hydroxycarbonsäure, wobei die Komponenten d) jeweils nur eine Hydroxyl- oder eine Aminogruppe aufweisen, und so endständige Carboxylgruppen erhalten werden,
e) ggf. mono-, di-, und/oder tri-amino- und/oder hydroxyfunktioneller Verbindungen und
f) ggf. sonstiger isocyanatreaktiver Verbindungen.

Komponente a) wird dabei typischerweise in Mengen von 0,5 bis 10, bevorzugt 0,75 bis 5 Gew.-% bezogen auf den wasser- und lösemittelfreien Polyurethan bzw. Polyurethan-Polyharnstoff eingesetzt.

Komponente b) wird dabei typischerweise in Mengen von 20 bis 94 , bevorzugt 30 bis 90 Gew.-% bezogen auf den wasser- und lösemittelfreien Polyurethan bzw. Polyurethan-Polyharnstoff eingesetzt.

Komponente c) wird dabei typischerweise in Mengen von 5 bis 60, bevorzugt 6 bis 45 Gew.-% bezogen auf den wasser- und lösemittelfreien Polyurethan bzw. Polyurethan-Polyharnstoff eingesetzt.

Komponente d) wird dabei typischerweise in Mengen von 0,25 bis 10, bevorzugt 0,4 bis 4 Gew.-% bezogen auf den wasser- und lösemittelfreien Polyurethan bzw. Polyurethan-Polyharnstoff eingesetzt.

Komponente e) wird dabei typischerweise in Mengen von 0 bis 10, bevorzugt 0 bis 5 Gew.-% bezogen auf den wasser- und lösemittelfreien Polyurethan bzw. Polyurethan-Polyharnstoff eingesetzt.

Komponente f) wird dabei typischerweise in Mengen von 0 bis 20, bevorzugt 0 bis 10 Gew.-% bezogen auf den wasser- und lösemittelfreien Polyurethan bzw. Polyurethan-Polyharnstoff eingesetzt.

Es ist im Rahmen der Erfindung selbstverständlich, dass durch die vorstehend beschriebenen Komponenten a) bis f) und deren typischen und bevorzugten Mengenangaben auch sämtliche Kombinationen der im einzelnen genannten Mengenbereiche untereinander erfasst sind.

Geeignete Sulphonat- oder Carboxylatgruppen enthaltende **Komponenten a)** sind z.B. Diaminoverbindungen bzw. Dihydroxyverbindungen, die zusätzlich Sulfonat- und/oder Carboxylatgruppen tragen, wie beispielsweise die Natrium-, Lithium-, Kalium-, tert.- Amin-Salze der N-(2-Aminoethyl)-2-aminoethansulfonsäure, der N-(3-Aminopropyl)-2-aminoethansulfonsäure, der N-(3-Aminoproyl)-3-aminopropansulfonsäure, der N-(2-Aminoethyl)-3-aminopropansulphonsäure, der analogen Carbonsäuren, der Dimethylolpropionsäure, der Dimethylolbuttersäure, der Umsetzungsprodukte im Sinne einer Michaeladdition von 1 Mol Diamin wie z.B. 1,2-Ethandiamin oder Isophorondiamin mit 2 mol Acrylsäure oder Maleinsäure.

Bevorzugt Komponenten a) sind N-(2-Aminoethyl)-2-aminoethansulfonat oder Dimethylolpropionat.

Die Säuren werden bevorzugt direkt in Ihrer Salzform als Sulphonat bzw. Carboxylat eingesetzt. Es ist jedoch auch möglich, die zur Salzbildung notwendigen Neutralisationsmittel anteilig oder ganz erst während oder nach der Herstellung der Polyurethane zuzugeben.

Für die Salzbildung besonders gut geeignete und bevorzugte tert. Amine sind z.B. Triethylamin, Dimethylcyclohexylamin, Ethyldiisopropylamin.

Es können auch andere Amine zur Salzbildung eingesetzt werden, wie z.B. Ammoniak, Diethanolamin, Triethanolamin, Dimethylethanolamin, Methydiethanolamin, Aminomethylpropanol und auch Mischungen der genannten und auch anderer Amine. Sinnvollerweise werden diese Amine erst nach der weitgehenden Umsetzung der Isocyanatgruppen zugegeben.

Es ist auch möglich andere Neutralisationsmittel wie z.B. Natrium-, Kalium-, Lithium, CalciumHydroxid für Neutralisationszwecke einzusetzen.

Komponente a) ist in dem erfindungsgemäßen Polyurethan zu 0,5 bis 10, bevorzugt zu 0,75 bis 5 und besonders bevorzugt zu 1 bis 3,75 Gew.-% enthalten.

Geeignete **Diol- und/oder Polyolkomponenten b)** sind Verbindungen mit mindestens zwei gegenüber Isocyanaten reaktionsfähigen Wasserstoffatomen und einem mittleren Molekulargewicht von 62 bis 18000, bevorzugt 62 bis 4000 g/Mol. Beispiele für geeignete Aufbaukomponenten sind Polyether, Polyester, Polycarbonate, Polylactone und Polyamide. Bevorzugte Polyole b) weisen 2 bis 4, besonders bevorzugt 2 bis 3 Hydroxylgruppen auf. Auch Gemische verschiedener derartiger Verbindungen kommen in Frage.

Als Polyesterpolyole kommen insbesondere lineare Polyesterdiole oder auch schwach verzweigte Polyesterpolyole in Betracht, wie sie in bekannter Weise aus aliphatischen, cycloaliphatischen oder aromatischen Di- oder Polycarbonsäuren, wie z.B. Bernstein-, Methylbernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal-, Cyclohexandicarbon-, Malein-, Fumar-, Malon- oder Trimellitsäure sowie Säureanhydride, wie o-Phthal-, Trimellit- oder Bernsteinsäureanhydrid oder deren Gemische mit mehrwertigen Alkoholen, wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische, gegebenenfalls unter Mitverwendung höherfunktioneller Polyole, wie Trimethylolpropan, Glycerin oder Pentaerythrit, hergestellt werden können. Als mehrwertige Alkohole zur Herstellung der Polyesterpolyole kommen natürlich auch cycloaliphatische und/oder aromatische Di- und Polyhydroxylverbindungen in Frage. Anstelle der freien Polycarbonsäure können auch die entsprechenden Polycarbonsäureanhydride oder entsprechende Polycarbonsäureester von niedrigen Alkoholen oder deren Gemische zur Herstellung der Polyester verwendet werden.

Selbstverständlich kann es sich bei den Polyesterpolyolen auch um Homo- oder Mischpolymerisate von Lactonen handeln, die bevorzugt durch Anlagerung von Lactonen oder Lactongemischen, wie Butyrolacton, ε-Caprolacton und/oder Methyl-ε-caprolacton an die geeignete di- und/oder höherfunktionelle Startermoleküle, wie z.B. die vorstehend als Aufbaukomponenten für Polyesterpolyole genannten niedermolekularen, mehrwertigen Alkohole erhalten werden. Die entsprechenden Polymerisate des ε-Caprolactons sind bevorzugt.

Besonders bevorzugt sind weitgehend lineare Polyesterpolyole, die als Aufbaukomponenten Adipinsäure und Butandiol-1,4 und/oder Hexandiol-1,6 und/oder 2,2-Dimethyl-1,3-propandiol enthalten.

Ebenfalls bevorzugt sind Polyesterpolyole, die als Aufbaukomponente Isophthalsäure und/oder Terephthalsäure, sowie Neopentylglykol, Ethylenglykol, Butandiol und/oder Hexandiol enthalten.

Auch Hydroxylgruppen aufweisende Polycarbonate kommen als Polyhydroxylkomponenten in Betracht, z.B. solche, die durch Umsetzung von Diolen wie 1,4-Butandiol und/oder 1,6-Hexandiol mit Diarylcarbonaten, wie z.B. Diphenylcarbonat, Dialkylcarbonaten, wie z. B. Dimethylcarbonat oder Phosgen hergestellt werden können. Durch die zumindest teilweise Verwendung von Hydroxylgruppen aufweisenden Polycarbonaten kann die Hydrolysebeständigkeit der Polyurethan- bzw. Polyurethan-Harnstoff-Dispersionsklebstoffe verbessert werden.

Bevorzugt sind Polycarbonate, die durch Umsetzung von 1,6-Hexandiol mit Dimethylcarbonat hergestellt wurden.

Als Polyetherpolyole geeignet sind z.B. die Polyadditionsprodukte der Styroloxide, des Ethylenoxids, Propylenoxids, Tetrahydrofurans, Butylenoxids, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole. Als Aufbaukomponenten A) geeignete Polyetherpolyole sind die Homo-, Misch- und Pfropfpolymerisate des Propylenoxids und des Ethylenoxids, welche durch Anlagerung der genannten Epoxide an niedermolekulare Di- oder Triole, wie sie oben als Aufbaukomponenten für Polyesterpolyole genannte werden oder an höherfunktionelle niedermolekulare Polyole wie z.B. Pentaerythrit oder Zucker oder an Wasser zugänglich sind.

Besonders bevorzugte di- oder höherfunktionelle Polyole b) sind Polyesterpolyole, Polylactone und Polycarbonate.

Ebenfalls geeignete Komponenten b) sind niedermolekulare Diole, Triole und/oder tetraole wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Neopentylglykol, 1,4-Cyclohexandiol, 1,4-Cyclohexandimethanol, 1,4-, 1,3-, 1,2-Dihydroxybenzol oder 2,2-Bis-(4-hydroxyphenyl)-propan (Bisphenol A), TCD-Diol, Trimethylolpropan, Glycerin, Pentaerythrit, Dipenthaerytrit oder deren Gemische, gegebenenfalls unter Mitverwendung weiterer nicht genannter Diole bzw. Triole.

Als Polyole können auch Umsetzungsprodukte der genannten Polyole, insbesondere der niedermolekularen Polyole, mit Ethylen- und/oder Propylenoxid eingesetzt werden.

Die niedermolekularen Komponenten b) haben ein Molekulargewicht von 62 bis 400 g/ Mol und werden bevorzugt in Kombination mit den oben beschriebenen Polyesterpolyolen, Polylactonen, Polyethern und/oder Polycarbonaten eingesetzt.

Polyolkomponente b) ist in dem erfindungsgemäßen Polyurethan zu 20 bis 95, bevorzugt zu 30 bis 90 und besonders bevorzugt zu 65 bis 88 Gew.-% enthalten

Als **Komponenten c)** sind beliebige organische Verbindungen geeignet, die mindestens zwei freie Isocyanatgruppen pro Molekül aufweisen. Bevorzugt werden Diisocyanate Y(NCO)₂ eingesetzt, wobei Y für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 KohlenstoffAtomen, einen zweiwertigen aromatischen Kohlenwasserstoffrest mit 6 bis 15 KohlenstoffAtomen oder einen zweiwertigen araliphatischen Kohlenwasserstoffrest mit 7 bis 15 Kohlenstoffatomen steht. Beispiele derartiger bevorzugt einzusetzender Diisocyanate sind Tetramethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethyl-cyclohexan, 4,4'-Diisocyanato-dicyclohexyl-methan, 4,4'-Diisocyanato-dicyclohexylpropan-(2,2), 1,4-Di-isocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, Tetramethylxylylendiisocyanat, p-Xylylendiisocyanat, p-Isopropylidendiisocyanat sowie aus diesen Verbindungen bestehende Gemische.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig mitzuverwenden.

Neben diesen einfachen Diisocyanaten sind auch solche Polyisocyanate geeignet, die Heteroatome in dem die Isocyanatgruppen verknüpfenden Rest enthalten und/oder eine Funktionalität von mehr als 2 Isocyanatgruppen pro Molekül besitzen. Erstere sind z.B. durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Carbodiimid-, Imino-oxadiazindion- und/oder Oxadiazintrionstruktur. Als Beispiel für ein nicht-modifiziertes Polyisocyanat mit mehr als 2 Isocyanatgruppen pro Molekül sei z.B. 4-Isocyanatomethyl-1,8-octandiisocyanat (Nonantriisocyanat) genannt.

Bevorzugte Diisocyanate c) sind aliphatische und araliphatische Diisocyanate wie Hexamethylendiisocyanat, 1,4-Diisocyanatocyclohexan, 1-Isocyanato-3,3,5-trimethyl-5-isocyanatomethyl-cyclohexan, 4,4'-Diisocyanato-dieyclohexyl-methan, 4,4'-Diisocyanato-dicydohexylpropan-(2,2), sowie aus diesen Verbindungen bestehende Gemische, die ggf. anteilig 2,4-Düsocyanatotoluol und/oder 2,6-Diisocyanatotoluol enthalten können.

Ganz besonders bevorzugte Komponenten c) sind Gemische aus Hexamethylendiisocyanat und 1-Isocyanato-3,3,5-trimethyl-5-isocyanatornethyl-cyclohexan, sowie Mischungen aus 1-Isocyanato-3,3,5-trimethyl-5-isocyanatomethyl-cyclohexan und/oder 4,4'-Diisocyanato-dicyclohexyl-methan und/oder 2,4-Diisocyanatotoluol und/oder 2,6-Diisocyanatotoluol.

Komponente c) ist in dem erfindungsgemäßen Polyurethan in Mengen von 5 bis 60, bevorzugt von 6 bis 45 und besonders bevorzugt in Mengen von 7 bis 25 Gew.-% enthalten

Als **Komponenten d)** geeignet sind Aminocarbonsäuren und/oder Hydroxycarbonsäuren, die jeweils nur eine isocyanatreaktive Aminogruppe oder Hydroxylgruppe enthalten, und somit bei der Herstellung der erfindungsgemäßen Polyurethane durch Umsetzung mit der Isocyanatkomponente zu endständigen Carboxylgruppen führen. Geeignet sind lineare aliphatische, verzweigte aliphatische, aliphatisch-aromatische und aromatische Aminocarbonsäuren bzw. Hydroxycarbonsäuren. Beispielhaft genannt als geeignete Komponente d) seien Aminocarbonsäuren mit einer primären oder sekundären Aminogruppe, wie Alanin, 6-Aminohexansäure, Aminoundecansäure, 8-Aminooctansäure, 5-Aminopentansäure, 4-Aminobuttersäure, Aminobenzoesäure, 5-Aminonaphtalin-1-sulfonsäure, 4-Aminonaphtalin-1-sulfonsäure, 2-Aminonaphtalin-1-sulfonsäure, 5-Aminonaphtalin-2-sulfonsäure, 8-Aminonaphtalin-1-sulfonsäure, 3-Aminonaphtalin-2-sulfonsäure, 4-Aminomethylcyclohexancarbonsäure, 2-Aminohexansäure, 4-Aminocyclohexan-carbonsäure, 12-Aminododecansäure, 9-Aminoononacarbonsäure. Ebenfalls geeignet sind Hydroxycarbonsäuren mit einer Hydroxygruppe, wie z.B. Hydroxypivalinsäure, Hydroxyessigsäure und 2-Hydroxpropansäure.

Bevorzugt werden als Komponente d) ausschließlich Aminocarbonsäuren und besonders bevorzugt Aminoalkylcarbonsäuren wie 6-Aminohexansäure eingesetzt, die in über die Aminogruppe eingebauter Form im Polymer enthalten sind.

Komponente d) ist in dem erfindungsgemäßen Polyurethan in Mengen von 0,25 bis 10, bevorzugt von 0,5 bis 5 und besonders bevorzugt in Mengen von 0,75 bis 3,5 Gew.-% enthalten.

Die Anzahl der für Vernetzungsreaktionen zur Verfügung stehenden endständigen Carboxylgruppen kann mittels der durch diese Carboxylgruppen verursachten Säurezahl definiert werden. Die erfindungsgemäßen Polyurethan-Dispersionen wiesen durch Komponente d) verursachte Säurezahlen von 2 bis 45 mg KOH/g Substanz, bevorzugt 3 bis 18 mg KOH/g Substanz und besonders bevorzugt von 3 bis 12 mg KOH/g Substanz auf. Die Säurezahlen beziehen sich dabei auf 100 % Feststoffgehalt des in der erfindungsgemäßen Polyurethan-Dispersion enthaltenen Polyurethans.

Geeignete **Komponenten e)** sind mono-, di-, trifunktionelle Amine und/oder mono-, di-, trifunktionelle Hydroxyamine, wie z.B. aliphatische und/oder alicyclische primäre und/oder sekundäre Monoamine wie Ethylamin, Diethylamin, die isomeren Propyl- und Butylamine, höhere linearaliphatische Monoamine und cycloaliphatische Monoamine wie Cyclohexylamin. Weitere Beispiele sind Aminoalkohole, d. h. Verbindungen, die in einem Molekül Amino- und Hydroxylgruppen enthalten, wie z. B. Ethanolamin, N-Methylethanolamin, Diethanolamin, Diisopropanolamin, 1,3-Diamino-2-propanol, N-(2-Hydroxyethyl)-ethylendiamin, N,N-Bis(2-Hydroxyethyl)-ethylendiamin und 2-Propanolamin. Weitere Beispiele sind Diamine und Triamine wie z.B. 1,2-Ethandiamin, 1,6-Hexamethylendiamin, 1-Amino-3,3,5-trimethyl-5-aminomethyl-cyclohexan (Isophorondiamin), Piperazin, 1,4-Diaminocyclohexan, Bis-(4-aminocyclohexyl)-methan und Diethylentriamin. Weiterhin kommen Adipinsaeuredihydrazid, Hydrazin bzw. Hydrazinhydrat in Frage. Selbstverständlich können auch Mischungen mehrerer der genannten, ggf. auch zusammen mit nicht genannten Verbindungen e) eingesetzt werden.

Bevorzugte Komponenten e) sind 1,2-Ethandiamin, 1-Amino-3,3,5-trimethyl-5-aminomethyl-cyclohexan, Diethylentriamin, Diethanolamin, Ethanolamin, N-(2-Hydroxyethyl)-ethylendiamin und N,N-Bis(2-Hydroxyethyl)-ethylendiamin.

Komponenten e) dienen als Kettenverlängerungsmittel bevorzugt dazu, höhere Molekulargewichte aufzubauen oder als monofunktionelle Verbindungen Molekulargewichte zu begrenzen und/oder ggf. zusätzlich weitere reaktive Gruppen, wie z.B. freie Hydroxylgruppen als weitere Vemetzungsstellen einzubauen.

Komponente e) ist in dem erfindungsgemäßen Polyurethan in Mengen von 0 bis 10, bevorzugt von 0 bis 5 und besonders bevorzugt in Mengen von 0,25 bis 4 Gew.-% enthalten.

Ggf. mit zu verwendende **Komponenten f)** können z.B. sein aliphatische, cycloaliphatische oder aromatische Monoalkohole mit 2 bis 22 C-Atomen wie Ethanol, Butanol, Hexanol, Cyclohexanol, Isobutanol, Benzylalkohol, Stearylalkohol, 2-Ethylethanol, Cyclohexanol; hydrophilierend wirkende, mono- oder difunktionelle Polyether auf Basis von auf Alkoholen oder Aminen gestartete Ethylenoxid-Polymeren oder Ethylenoxid/Propylenoxid-Copolymeren, wie z.B. Polyether LB 25 ( Bayer Material Science AG; Deutschland)oder MPEG 750: Methoxypolyethylenglykol, Molekulargewicht 750 g/Mol (z.B. Pluriol® 750, BASF AG, Deutschland); für Isocyanatgruppen gebräuchliche, unter erhöhten Temperaturen wieder abspaltbare Blockierungsmittel wie z.B. Butanonoxim, Dimethylpyrazol, Caprolactam, Malonester, Triazol, Dimethyltriazol, tert.-Butyl-benzylamin, Cyclopentanoncarboxyethylester; ungesättigte, für Polymerisationsreaktionen zugängliche Gruppen enthaltende Verbindungen wie z.B. Hydroxyethylacrylat, Hydroxyethylmethacrylat, Hydroxybutylacrylat, Hydroxybutylmethacrylat, Hydroxypropylacrylat, Hydroxypropylmethacrylat, Pentaerythrittrisacylat, hydroxyfunktionelle Umsetzungsprodukte aus Monoepoxiden, Bisepoxiden und/oder Polyepoxiden mit Acrylsäure oder Methacrylsäure.

Komponenten f) können in dem erfindungsgemäßen Polyurethan in Mengen von 0 bis 20, bevorzugt von 0 bis 10 Gew.-% enthalten sein.

Die Mitverwendung von Komponente f) kann z.B. zu erfindungsgemäßen Polyurethan-Dispersionen führen, die zusätzlich zu den reaktiven Carboxylgruppen weitere reaktive Gruppen enthalten, was z.B. die Anwendung verschiedener Vernetzungsmechanismen (Dual Cure) ermöglicht, um spezielle Eigenschaften, wie z.B. ein zweistufige, ggf. zeitlich versetzte Aushärtung oder besonders hohe Vernetzungsdichte zu erzielen.

Bevorzugt erfolgt die Vernetzung überwiegend bzw. ausschließlich über die eingebauten endständigen Carboxylgruppen, so dass auf Komponente f) verzichtet wird.

Die erfindungsgemäßen Polyurethan-Dispersionen weisen Feststoffgehalte von 15 bis 70, bevorzugt von 20 bis 60 Gew.-% auf. Der pH-Wert liegt im Bereich von 4 bis 11, bevorzugt 5 bis 10. Die mittleren Teilchengrößen liegen üblicherweise zwischen 20 bis 750 nm, bevorzugt bei 30 bis 450 nm.

Gegenstand der vorliegenden Erfindung ist weiterhin ein Verfahren zur Herstellung der erfindungsgemäßen wässrigen Polyurethan- bzw. Polyurethan-Harnstoff-Dispersionen, **dadurch gekennzeichnet, dass** Komponenten a), b), c) und ggf. f) in einer ein- oder mehrstufigen Reaktion zu einen isocyanatfunktionellen Prepolymeren umgesetzt werden, welches anschließend mit Komponente d) und ggf. e) in einer ein- oder zweistufigen Reaktion umgesetzt wird und dann in oder mit Wasser dispergiert wird, wobei ggf. mit verwendetes Lösemittel während oder nach der Dispergierung destillativ anteilig oder ganz entfernt werden kann.

Die Herstellung der erfindungsgemäßen wässrigen Polyurethan- bzw. Polyurethan-Harnstoff-Dispersonen kann in einer oder mehreren Stufen in homogener, oder bei mehrstufiger Umsetzung, teilweise in disperser Phase durchgeführt werden. Nach vollständig oder teilweise durchgeführter Polyaddition erfolgt ein Dispergier-, Emulgier- oder Lösungsschritt. Im Anschluss erfolgt gegebenenfalls eine weitere Polyaddition oder Modifikation in disperser Phase. Zur Herstellung können sämtliche, aus dem Stand der Technik bekannte Verfahren wie Emulgator-Scherkraft-, Aceton-, Prepolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der organischen Chemie (Houben-Weyl, Erweiterungs- und Folgebände zur 4. Auflage, Band E20, H. Bartl und J. Falbe, Stuttgart, New York, Thieme 1987, S. 1671-1682). Bevorzugt sind das Schmelz-Emulgier-, Prepolymer-Misch- und das Aceton-Verfahren. Besonders bevorzugt ist das Aceton-Verfahren.

Grundsätzlich ist es möglich alle Komponenten alle hydroxylfunktionellen Komponenten einzuwiegen, dann alle isocyanatfunktionellen Komponenten zu zugeben und zu einem isocyanatfunktionellen Polyurethan umzusetzen, welches dann mit den aminofunktionellen Komponenten zur Reaktion gebracht wird. Auch eine umgekehrte Herstellung, Vorlegen der Isocyanatkomponente, Zugabe der hydroxylfunktionellen Komponenten, Umsetzung zum Polyurethan und dann Umsetzung mit den aminofunktionellen Komponenten zum Endprodukt ist möglich.

Üblicherweise werden die hydroxylfunktionellen Komponenten b), ggf. f) und ggf. a) zur Herstellung eines Polyurethanprepolymers im Reaktor ganz oder teilweise vorgelegt, gegebenenfalls mit einem mit Wasser mischbaren aber gegenüber Isocyanatgruppen inerten Lösungsmittel verdünnt und dann homogenisiert. Anschließend wird bei Raumtemperatur bis 120°C die Komponente c) zudosiert und ein isocyanatfunktionelles Polyurethan hergestellt. Diese Umsetzung kann einstufig und auch mehrstufig erfolgen. Eine mehrstufige Umsetzung kann z.B. in der Art erfolgen, dass eine Komponente b) vorgelegt wird und nach Umsetzung mit der isocyanatfunktionellen Komponente c) eine zweite Komponente a) hinzu gegeben wird, die dann mit einen Teil der noch vorhandenen Isocyanatgruppen abregieren kann.

Geeignete Lösungsmittel sind z.B. Aceton, Methylisobutylketon, Butanon, Tetrahydrofuran, Dioxan, Acetonitril, Dipropylenglykoldimethylether und 1-Methyl-2-pyrrolidon, die nicht nur zu Beginn der Herstellung, sondern gegebenenfalls in Teilen auch später zugegeben werden können. Bevorzugt sind Aceton und Butanon. Es ist möglich, die Reaktion unter Normaldruck oder erhöhtem Druck durchzuführen.

Zur Herstellung des Prepolymers werden die Einsatzmengen der hydroxyl- und ggf. aminofunktionellen Komponenten so bemessen, dass eine Isocyanatkennzahl von 1,05 bis 2,5, bevorzugt von 1,15 bis 1,85 resultiert.

Die weitere Umsetzung, die sogenannte Kettenverlängerung, des isocyanatfunktionellen Prepolymeren mit weiteren hydroxyl- und/oder aminofunktionellen, bevorzugt nur mit aminofunktionellen Komponenten a), d), e) und ggf. f) erfolgt derart, dass ein Umsetzungsgrad von 25 bis 150, bevorzugt von 40 bis 85 % Hydroxyl- und/oder Aminogruppen bezogen auf 100% Isocyanatgruppen gewählt wird.

Bei Umsetzungsgraden über 100%, die möglich aber weniger bevorzugt sind, ist es angebracht, zunächst alle im Sinne der Isocyanatadditionsreaktion monofunktionellen Komponenten mit dem Prepolymeren umzusetzen und dann die di- oder höherfunktionellen Kettenverlängerungskomponenten einzusetzen, um einen möglichst vollständigen Einbau aller Kettenverlängerungsmoleküle zu erhalten.

Der Umsetzungsgrad wird üblicherweise durch Verfolgung des NCO-Gehalts der Reaktionsmischung überwacht. Dazu können sowohl spektroskopische Messungen, z.B. Infrarot- oder Nahinfrarot-Spektren, Bestimmungen des Brechungsindex als auch chemische Analysen, wie Titrationen von entnommenen Proben vorgenommen werden.

Zur Beschleunigung der Isocyanatadditionsreaktion können übliche Katalysatoren, wie sie zur Beschleunigung der NCO-OH-Reaktion dem Fachmann bekannt sind, eingesetzt werden. Beispiele sind Triethylamin, 1,4-Diazabicyclo-[2,2,2]-octan, Dibutylzinnoxid, Zinndioktoat oder Dibutylzinndilaurat, Zinn-bis-(2-ethylhexanoat) oder andere metallorganische Verbindungen.

Die Kettenverlängerung des isocyanatfunktionellen Prepolymeren mit der Komponente d) und ggf. e) kann vor dem Dispergieren, während des Dispergierens oder nach dem Dispergieren durchgeführt werden. Bevorzugt erfolgt die Kettenverlängerung vor der Dispergierung. Wird Komponenten a) als Kettenverlängerungskomponente eingesetzt, so ist eine Kettenverlängerung mit dieser Komponente vor dem Dispergierschritt zwingend.

Die Kettenverlängerung wird üblicherweise bei Temperaturen von 10 bis 100°C, bevorzugt von 25 bis 60°C durchgeführt.

Der Begriff Kettenverlängerung im Sinne der vorliegenden Erfindung beinhaltet auch die Reaktionen ggf. monofunktioneller Komponenten d) oder auch e) die infolge ihrer Monofunktionalität als Kettenabbrecher fungieren und somit nicht zu einer Zu-, sondern zu einer Begrenzung des Molekulargewichtes führen.

Die Komponenten der Kettenverlängerung können mit organischen Lösungsmitteln und/oder mit Wasser verdünnt dem Reaktionsgemisch zugegeben werden. Die Zugabe kann nacheinander in beliebiger Reihenfolge oder gleichzeitig durch Zugabe einer Mischung erfolgen.

Zwecks Herstellung der Polyurethan-Dispersion wird das Prepolymer, gegebenenfalls unter starker Scherung, wie z.B. starkem Rühren, entweder in das Dispergierwasser eingetragen oder man rührt umgekehrt das Dispergierwasser zu den Prepolymeren. Anschließend kann dann, falls noch nicht in der homogenen Phase geschehen, die Kettenverlängerung erfolgen.

Während und/oder nach der Dispergierung wird das gegebenenfalls eingesetzte organische Lösungsmittel, beispielsweise Aceton, abdestilliert.

Ein bevorzugtes Herstellverfahren ist das im Folgenden Beschriebene:

Komponente b), ggf. Komponente a) und ggf. Komponente f) und ggf. Lösemittel werden vorgelegt und auf 20 bis 100°C aufgeheizt, Unter Rühren wird Komponente c) so schnell wie möglich zudosiert. Unter Ausnutzung der Exothermie wird die Reaktionsmischung solange bei 40 bis 150°C gerührt, bis der theoretische Isocyanatgehalt erreicht, bzw. leicht unterschritten ist. Dabei kann ggf. Katalysator zugesetzt werden. Anschließend wird durch Zugabe von Lösemittel auf Feststoffgehalte von 25 bis 95, bevorzugt von 40 bis 80 Gew. % verdünnt, und dann die Kettenverlängerung durch Zugabe der mit Wasser und/oder Lösemittel verdünnten Komponente d), ggf. zusammen mit Komponente a), und/oder Komponente e) und/oder Komponente f) bei 30 bis 120°C durchgeführt. Nach 2 bis 60 Minuten Reaktionszeit wird durch Zugabe von destilliertem Wasser bzw. durch Überführen in vorgelegtes destilliertes Wasser dispergiert und das eingesetzte Lösemittel während oder nach dem Dispergierschritt teilweise oder vollständig abdestilliert.

Die erfindungsgemäßen Dispersionen können alleine oder mit den in der Beschichtungs- und Klebstofftechnologie bekannten Bindemitteln, Hilfsstoffen und Zugschlagstoffen, insbesondere Emulgatoren und Lichtschutzmitteln wie UV-Absorbern und sterisch gehinderte Aminen (HALS), weiterhin Antioxidantien, Füllstoffen und Hilfsmitteln, z.B. Antiabsetzmitteln, Entschäumungs- und/oder Netzmitteln, Verlaufmitteln, Reaktiv-Verdünnern, Weichmachern, Neutralisationsmitteln, Katalysatoren, Hilfslösemitteln und/oder Verdickern und Additiven, wie beispielsweise Pigmente, Farbstoffe oder Mattierungsmittel eingesetzt werden. Auch Klebrigmacher ("Tackifier") können zugegeben werden.

Die Additive können dem erfindungsgemäßen Produkten unmittelbar vor der Verarbeitung zugegeben werden. Es ist aber auch möglich, zumindest einen Teil der Additive vor oder während der Dispergierung des Bindemittels zuzugeben.

Die Auswahl und die Dosierung dieser Stoffe, die den Einzelkomponenten und/oder der Gesamtmischung zugegeben werden können, sind dem Fachmann prizipiell bekannt und können ohne ungebührlich hohen Aufwand auf den speziellen Anwendungsfall zugeschnitten durch einfache Vorversuche ermittelt werden.

Die Dispersionen können auch zusammen mit anderen wässrigen bzw. lösemittelhaltigen Oligomeren bzw. Polymeren gemischt und gemeinsam eingesetzt werden. Prinzipiell geeignet sind z. B. Polyvinylester-, Polyvinylether-, Polyvinylakohol-, Polyethylen-, Polystyrol-, Polybutadien-, Polyvinylchlorid-, Polyurethan-, Polyurethan-Polyharnstoff-, Polyurethan-Polyacrylat-, Polyester-, Polyacrylat- und/oder Copolymerisat-Dispersionen bzw. Emulsionen bzw. wässrige oder organische Lösungen. Bei solchen Mischungen muss jeweils durch einfache Vorversuchen die Verträglichkeit geprüft werden.

Auch Kombinationen mit Bindemitteln der beispielhaft genannten Art, die funktionelle Gruppen, wie z.B. Carboxylgruppen, Hydroxylgruppen und/oder blockierte Isocyanatgruppen enthalten können, sind möglich.

Ebenfalls Gegenstand der vorliegenden Erfindung sind Bindemittelkombinationen für Beschichtungsmittel-, Klebstoff- und/oder Dichtstoff-Anwendungen, enthaltend i) die erfindungsgemäßen Polyurethan- bzw. Polyurethanharnstoff-Dispersionen.

In einer bevorzugten Ausführungsform enthalten diese Bindemittelkombinationen ferner ii) carboxylreaktive Gruppen enthaltende Vernetzer, wie z.B. Carbodiimide, Aziridine, Epoxide mit mindestens 2 reaktiven Gruppen.

Bevorzugt enthalten die erfindungsgemäßen Bindemittelkombinationen 50 bis 99,5, bevorzugt 75 bis 99, besonders bevorzugt 88 bis 99 Gew.-% Komponente i) und 0,5 bis 50, bevorzugt 1 bis 25, besonders bevorzugt 1 bis 12 Gew.-% Komponente ii).

Bevorzugt enthalten die erfindungsgemäßen Bindemittelkombinationen in Komponente ii) Carbodiimidgruppen aufweisende Vernetzer.

Besonders bevorzugt sind Carbodiimidvemetzer, die in Wasser dispergiert, emulgiert, gelöst bzw. in Wasser dispergierbar, emulgierbar und/oder löslich sind.

Bevorzugt sind Carbodiimidstrukturen enthaltende Vernetzer die durchschnittlich 3 bis 20, besonders bevorzugt sind Carbodiimidstrukturen enthaltende Vernetzer die durchschnittlich 4 bis 8 Carbodiimidstruktureinheiten je Molekül enthalten.

Solche Carbodiimidvernetzer können z.B. durch Carbodiimidisierung von Diisocyanaten wie z.B. Tetramethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethyl-cyclohexan, 4,4'-Diisocyanato-dicyclohexyl-methan, 4,4'-Diisocyanata-dicyclohexylpropan-(2,2), 1,4-Di-isocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, Tetramethylxylylendiisocyanat, p-Xylylendiisocyanat, p-Isopropylidendiisocyanat, ggf. unter Mitverwendung von monofunktionellen Isocyanaten wie z.B. Stearylisocyanat, Phenylisocyanat, Butylisocyanat, Hexylisocyanat oder/und höherfunktionellen Isocyanaten wie Trimere, Uretdione, Allophanate, Biurete der beispielhaft genannten Diisocyanate und anschließender, gleichzeitiger oder auch vorhergehender Umsetzung mit hydrophilierenden Komponenten, z.B. mono- oder difunktionelle Polyethern auf Basis von auf Alkoholen oder Aminen gestartete Ethylenoxid-Polymeren oder Ethylenoxid/Propylenoxid-Copolymeren erhalten werden.

Bevorzugte Carbodiimide ii) werden durch Carbodiimidisierung von 1-Isocyanato-3,3,5-trimethyl-5-isocyanatomethyl-cyclohexan und/oder 4,4'-Diisocyanato-dicyclohexyl-methan erhalten.

Der Einsatz von gemischten Carbodiimiden, welche z.B. Carbodiimide auf Basis unterschiedlicher Isocyanate enthalten, ist ebenfalls möglich.

Geeignete Carbodiimide ii) sind z.B. Carbodilite® SV-02, Carbodilite® V-02-L2 und Carbodilite® E-02 (alle von Nisshinbo Industries, Tokio, Japan). Ein bevorzugtes Carbodiimid ist Carbodilite® V-02-L2.

Carbodilite® V-02-L2 ist ein nichtionisch hydrophiliertes, cycloaliphatisches Carbodiimid 40 Gew.-%-ig in Wasser, mit einem Carbodiimidequivalentgewicht von ca. 385.

Geeignete Carbodiimide ii) sind ebenfalls wässrige Carbodiimiddispersionen bzw. Carbodiimidemulsionen bzw. Carbodiimidlösungen und/oder wasserdispergierbare Carbodiimide, enthaltend Umsetzungsprodukte von
A) mindestenes einem Carbodiimid, welches durchschnittlich 3 bis 20, vorzugsweise 4 bis 8 Carbodiimidstruktureinheiten auf Basis von Desmodur® W, Desmodur® I, Desmodur® H und/oder Desmodur® T (alle Bayer MaterialScience, Deutschland) aufweist und
B) hydrophilen Komponenten wie z.B. mindestens einem hydroxyfunktionellen Polyether auf Basis von Ethylenoxid bzw. auf Basis von Etyhlen und Propylenoxid, wie z.B. Methoxypolyethylenglykole, Ethyoxypolyethylenglykole, Butoxypolyethylenglykole mit Molekulargewichten von 350 bis 3000 g/Mol, wie Carbowax^{®}MPEG 750, MPEG 550, MPEG 350 (DOW Chemical Company, USA), Polyether LB 25 (Bayer MaterialScience, Deutschland) und/oder entsprechende aminofunktionelle Polyether und/oder ionische hydrophilierend wirkende Substanzen wie Salze von Aminocarbonsäuren, Hydroxycarbonsäuren oder Aminosulphonsäuren, wie z.B. Dimethylolpropionsäure, Dimethylolbuttersäure, Hydroxypivalinsäure, Aminoethansulphonsäure,
C) ggf. sonstigen hydroxy- und/oder aminofunktionellen und/oder anderen isocyanatreaktive Verbindungen wie z.B. Monoalkoholen wie Butylglykol, Butyldiglykol, Ethoxydiglykol, Methoxypropanol, Methyoxyglykol, Methanol, Benzylakohol, Fettalkohole, 2-Etyhlhexanol, Stearylalkohol, Oleylalkohol, Ethanol, Butanol, Isopropanol, Hexanol, Cyclohexanol, Octanol, Pentanol und/oder Monoaminen, Oximen, Lactamen wie Diethylamin, Diisopropylamin, Triazol, Dimethyltriazol, Dimethylpyrazol, Morpholin, Butanonoxim, Caprolactam, tert.-butyl-Benzylamin und/oder Malonsäuredialkylester, Acetessigester, Cyclopenatanoncarboxyalkylester und/oder Diolen, Diaminen, Aminoakoholen, Triolen wie z.B. Trimethylolpropan, Glycerin, Neopentylglykol, Butandiol, Ethylenglykol, Cyclohexandiol, Cyclohexandimethanol, Propylenglykol, Diethylenglykol, Dipropylenglykol, Triethylenglykol, Tripropylenglykol, Ethanolamin, Diethanolamin, Isopropanolamin, Diisopropanolamin, Triethanolamin, Hydroxyethylethylendiamin, Ethylendiamin, Isophorondiamin, Hexamethylendiamin, Hydrazin.

Die Komponenten A) B) und C) können in beliebiger Reihenfolge, ggf. auch in Anwesenheit von Lösemitteln zur Reaktion gebracht werden.

Carbodiimide ii) enthalten vorzugsweise Umsetzungsprodukte aus
50 bis 97 Gew.-% Komponente A),
3 bis 40 Gew.-% Komponente B) und
0 bis 25 Gew.-% Komponente C).

Besonders bevorzugt enthalten die Carbodiimide ii) Umsetzungsprodukte aus
60 bis 90 Gew.-% Komponente A),
5 bis 27 Gew.-% Komponente B) und
0,5 bis 15 Gew.-% Komponente C).

Die Carbodiimide können nach bekannten Verfahren hergestellt werden. Als Katalysatoren geeignet sind z.B. heterocyclische, Phosphor gebunden enthaltende Verbindungen, Metallcarbonyle, Phospholine, Phospholene und Phospholidine sowie deren Oxide und Sulfide.

Bevorzugt wird zunächst ein Carbodiimid durch Erhitzen mindestens eines mindestens difunktionellen Isocyanates in Gegenwart eines geeigneten Katalysators, wie z.B. Phospholinoxid, auf 100 bis 250°C solange unter Kohlendioxidabspaltung zur Reaktion gebracht, bis der gewünschte Umsetzungsgrad erreicht ist, und dieses Carbodiimid dann in einem weiteren Reaktionsschritt mit Komponente B) und ggf. gleichzeitig bzw. anschließend mit Komponente C) umgesetzt und ggf. anschließend dispergiert, emulgiert oder gelöst

Bevorzugte Bindemittelkombinationen enthalten
75 bis 99 Gew.-% erfindungsgemäße Dispersion Komponente i) und
1 bis 25 Gew.% Carbodilite® V-02-L2 II Komponente ii).

Besonders bevorzugte Bindemittelkombinationen enthalten
88 bis 99 Gew.-% erfindungsgemäße Dispersion Komponente i) und
1 bis 12 Gew.-% Carbodilite® V-02-L2 II Komponente ii).

Erfindungsgemäßen Bindemittelkombinationen in Lackanwendungen eignen sich z.B. zum Beschichten bzw. Lackieren von beliebigen Substraten, wie z.B. Metallen und Legierungen aller Art, Holz, Holzwerkstoffen, Spannplatten, MDF-Platten, Keramik, Stein, Beton, Bitumen, Hartfaser, Glas, Glasfasern, Kohlenstofffasern, Kohlenstoffnanoröhrchen, Porzellan, Kunststoffen, Leder, Textilien und/oder textilen Fasern der verschiedensten Art.

Gegenstand der Erfindung sind ebenfalls mit den erfindungsgemäßen Bindemittelkombinationen beschichtete bzw. lackierte Substrate.

Entsprechende Bindemittel bzw. Bindemittelkombinationen in Klebstoffanwendungen eignen sich zum Verkleben beliebiger Substrate wie z. B. Papier, Pappe, Holz, Textilien, Metall, Legierungen, Stoffen, Fasern, Kunstleder, Leder oder mineralischer Materialen. Sie eignen sich ebenfalls zum Kleben von Gummimaterialien wie z. B. Natur- und Synthesekautschuken, verschiedenen Kunststoffen wie Polyurethanen, Polyvinylacetat, Polyvinylchlorid, insbesondere weichmacherhaltigem Polyvinylchlorid. Die Klebstoffe sind ebenfalls geeignet für das Verkleben von thermoplastischen Kunststoffen wie z.B. ABS (Acryl-Butadien-Styrol), PC (Polycarbonat) und deren Mischungen, sowie polyolefinischen Kunststoffen ggf. nach geeigneter Vorbehandlung

Die Klebstoffe sind ebenfalls geeignet für die Verwendung zum Verkleben von Sohlen aus diesen Materialien, insbesondere auf Basis von Polyvinylchlorid, insbesondere weichmachehaltigem Polyvinylchlorid oder von Polyethylvinylacetat- oder Polyurethan-Elastomerschaum mit Schuhschäften aus Leder oder Kunstleder. Weiterhin sind die erfindungsgemäßen Klebstoffe besonders geeignet zur Verklebung von Folien auf Basis Polyvinylchlorid oder weichmacherhaltigem Polyvinylchlorid mit Holz.

Klebstoffverbünde enthaltend mit den erfindungsgemäßen Polyurethan- bzw. Polyurethanharnstoff-Dispersionen verklebte Substrate sind ebenfalls Gegenstand der vorliegenden Anmeldung.

Die Verarbeitung der erfindungsgemäßen Beschichtungsmittel bzw. Klebstoffe erfolgt nach den bekannten Methoden der Beschichtungstechnologie bzw. Klebstofftechnologie bezüglich der Anwendungen und Verarbeitung von wässrigen Dispersionen bzw. wässrigen Emulsionen bzw. wässrigen Lösungen.

### Beispiele

### Einsatzstoffe

| | |
|---|---|
| Polyester I: | 1,4-Butandiolpolyadipatdiol der OH-Zahl = 50 |
| Polyester II: | Polyesterdiol aus 1,6-Hexandiol, Neopentylglykol und Adipinsäure der OH-Z = 66 |
| Polyester III: | 1,4-Butandiolpolyadipatdiol der OH-Zahl = 120 |
| Polyester IV: | 1,6-Hexandiolpolyphthalatdiol der OH-Zahl =56 |
| Desmodur^{®}H: | Hexamethylendiisocyanat-1,6 (Bayer MaterialScience AG, Leverkusen/D) |
| Desmodur^{®} I: | Isophorondiisocyanat (Bayer MaterialScience AG, Leverkusen/D) |
| Polyether LB 25: | Auf Butanol gestarteter Ethylenoxidpolyether mit durchschnittlichem MG 2250 g/Mol |
| Emulgator FD®: | Fettalkoholpoly(ethylen/propylenglykol)ether ( Lanxess AG, Leverkusen, D) |
| Carbodiimid A): | Carbodilite® V-02-L2 ( Nisshinbo Industries Inc, Japan) |
| Carbodiimid B): | Wässrige Carbodiimiddispersion, hergestellt durch Umsetzung von 4,5 Equivalenten eines Carbodiimides mit durchschnittlich ca. 4 Carbodiimidstruktureinheiten auf Basis Desmodur® W (Bayer MaterialScience, Deutschland), mit 1 Equivalent Carbowax^{®} MPEG 750 (DOW Chemical Company, USA) und 3,5 Equivalenten Butylglykol, 40% dispergiert in Wasser. |

### Beispiel 1:

759 g Polyester I werden 1 Stunde bei 110°C und 15 mbar entwässert, dann werden 3,4 g Trimethylolpropan zugegeben und unter Rühren abgekühlt. Bei 60°C werden 56,7 g Desmodur^{®} H und anschließend 50,0 g Desmodur^{®} I zugegeben. Die Mischung wird bei 80 bis 90°C gerührt, bis ein Isocyanatgehalt von 1,8 % erreicht ist. Das Reaktionsgemisch wird in 1300 g Aceton gelöst und dabei auf 50°C abgekühlt. In die homogene Lösung wird eine Lösung aus 14,95 g Natriumsalz der N-(2-Aminoethyl)-2-aminoethansulfonsäure und 12,8g 6-Aminohexansäure in 75 g Wasser unter kräftigem Rühren gegeben. Nach 30 Minuten wird durch Zugabe von 1015 g Wasser dispergiert. Nach destillativer Abtrennung des Acetons werden 10,1 g Emulgator FD® zugesetzt. Es wird eine lösemittelfreie, wässrige Polyurethan-Polyharnstoff-Dispersion mit einen Feststoffgehalt von 47 Gew.-% und einer mittlere Teilchengröße der dispersen Phase, ermittelt durch Laserkorrelation, von 350 nm erhalten. Der pH-Wert ist 6,0. Die Menge der endständigen, für eine Vernetzung zur Verfügung stehenden Carboxylgruppen, definiert durch die rechnerisch ermittelte Säurezahl = 6,0 mg KOH/g Substanz (bezogen auf 100% Feststoffgehalt der Dispersion).

### Beispiel 2

633 g Polyester I und 96 Polyester II werden 1 Stunde bei 110°C und 15 mbar entwässert, dann werden 3,4 g Trimethylolpropan zugegeben und unter Rühren abgekühlt. Bei 60°C werden 56,7 g Desmodur^{®} H und anschließend 50,0 g Desmodur^{®} I zugegeben. Die Mischung wird bei 80 bis 90°C gerührt, bis ein Isocyanatgehalt von 1,5 % erreicht ist. Das Reaktionsgemisch wird in 1250 g Aceton gelöst und dabei auf 50°C abgekühlt. In die homogene Lösung wird eine Lösung aus 17,1 g Natriumsalz der N-(2-Aminoethyl)-2-aminoethansulfonsäure und 12,8 g 6-Aminohexansäure in 75 g Wasser unter kräftigem Rühren gegeben. Nach 30 Minuten wird durch Zugabe von 1130 g Wasser dispergiert. Nach destillativer Abtrennung des Acetons werden 10,1 g Emulgator FD® zugesetzt. Es wird eine lösemittelfreie, wässrige Polyurethan-Polyharnstoff-Dispersion mit einen Feststoffgehalt von 44 Gew.-% und einer mittlere Teilchengröße der dispersen Phase, ermittelt durch Laserkorrelation, von 226 nm erhalten. Der pH-Wert ist 5,9. Die Menge der endständigen, für eine Vernetzung zur Verfügung stehenden Carboxylgruppen, definiert durch die rechnerisch ermittelte Säurezahl = 6,2 mg KOH/g Substanz (bezogen auf 100% Feststoffgehalt der Dispersion).

### Beispiel 3

709 g Polyester I werden 1 Stunde bei 110°C und 15 mbar entwässert, dann werden 3,1 g Trimethylolpropan zugegeben und unter Rühren abgekühlt. Bei 60°C werden 52,9 g Desmodur^{®} H und anschließend 46,6 g Desmodur^{®} I zugegeben. Die Mischung wird bei 80 bis 90°C gerührt, bis ein Isocyanatgehalt von 1,7 % erreicht ist. Das Reaktionsgemisch wird in 1200 g Aceton gelöst und dabei auf 50°C abgekühlt. In die homogene Lösung wird eine Lösung aus 14,6 g Natriumsalz der N-(2-Aminoethyl)-2-aminoethansulfonsäure und 10,4 g 6-Aminohexansäure in 70 g Wasser unter kräftigem Rühren gegeben. Nach 30 Minuten wird durch Zugabe von 975 g Wasser dispergiert. Nach destillativer Abtrennung des Acetons werden 9,5 g Emulgator FD® zugesetzt. Es wird eine lösemittelfreie, wässrige Polyurethan-Polyharnstoff-Dispersion mit einen Feststoffgehalt von 49 Gew.-% und einer mittlere Teilchengröße der dispersen Phase, ermittelt durch Laserkorrelation, von 230 nm erhalten. Der pH-Wert ist 5,9. Die Menge der endständigen, für eine Vernetzung zur Verfügung stehenden Carboxylgruppen, definiert durch die rechnerisch ermittelte Säurezahl = 6,5 mg KOH/g Substanz (bezogen auf 100% Feststoffgehalt der Dispersion).

### Beispiel 4

506 g Polyester I und 162 Polyester III werden 1 Stunde bei 110°C und 15 mbar entwässert, dann werden 4 g Trimethylolpropan zugegeben und unter Rühren abgekühlt. Bei 60°C werden 68 g Desmodur^{®} H und anschließend 51,9 g Desmodur^{®} I zugegeben. Die Mischung wird bei 80 bis 90°C gerührt, bis ein Isocyanatgehalt von 1,4 % erreicht ist. Das Reaktionsgemisch wird in 1180 g Aceton gelöst und dabei auf 50°C abgekühlt. In die homogene Lösung wird eine Lösung aus 16,2 g Natriumsalz der N-(2-Aminoethyl)-2-aminoethansulfonsäure und 14,1 g 6-Aminohexansäure in 90 g Wasser unter kräftigem Rühren gegeben. Nach 30 Minuten wird durch Zugabe von 1000 g Wasser dispergiert. Nach destillativer Abtrennung des Acetons werden 9,2 g Emulgator FD® zugesetzt. Es wird eine lösemittelfreie, wässrige Polyurethan-Polyharnstoff-Dispersion mit einen Feststoffgehalt von 47 Gew.-% und einer mittlere Teilchengröße der dispersen Phase, ermittelt durch Laserkorrelation, von 244 nm erhalten. Der pH-Wert ist 5,9. Die Menge der endständigen, für eine Vernetzung zur Verfügung stehenden Carboxylgruppen, definiert durch die rechnerisch ermittelte Säurezahl = 7,3 mg KOH/g Substanz (bezogen auf 100% Feststoffgehalt der Dispersion).

### Beispiel 5

810 g Polyester I werden 1 Stunde bei 110°C und 15 mbar entwässert, dann werden 8,1 g 1,4-Butandiol zugegeben und unter Rühren abgekühlt. Bei 60°C werden 64,3 g Desmodur^{®} H und anschließend 59,9 g Desmodur^{®} I zugegeben. Die Mischung wird bei 80 bis 90°C gerührt, bis ein Isocyanatgehalt von 1,6 % erreicht ist. Das Reaktionsgemisch wird in 1400 g Aceton gelöst und dabei auf 50°C abgekühlt. In die homogene Lösung wird eine Lösung aus 16,0 g Natriumsalz der N-(2-Aminoethyl)-2-aminoethansulfonsäure und 12,5 g 6-Aminohexansäure in 90 g Wasser unter kräftigem Rühren gegeben. Nach 30 Minuten wird durch Zugabe von 900 g Wasser dispergiert. Nach destillativer Abtrennung des Acetons werden 12,2 g Emulgator FD® zugesetzt. Es wird eine lösemittelfreie, wässrige Polyurethan-Polyharnstoff-Dispersion mit einen Feststoffgehalt von 47 Gew.-% und einer mittlere Teilchengröße der dispersen Phase, ermittelt durch Laserkorrelation, von 148 nm erhalten. Der pH-Wert ist 6,2. Die Menge der endständigen, für eine Vernetzung zur Verfügung stehenden Carboxylgruppen, definiert durch die rechnerisch ermittelte Säurezahl = 7,1 mg KOH/g Substanz (bezogen auf 100% Feststoffgehalt der Dispersion).

### Beispiel 6

630 g Polyester IV werden 1 Stunde bei 110°C und 15 mbar entwässert, dann werden 5,3 g 1,6-Hexandiol zugegeben und unter Rühren abgekühlt. Bei 60°C werden 94,5 g Desmodur^{®} H zugegeben. Die Mischung wird bei 80 bis 90°C gerührt, bis ein Isocyanatgehalt von 1,5 % erreicht ist. Das Reaktionsgemisch wird in 1080 g Aceton gelöst und dabei auf 50°C abgekühlt. In die homogene Lösung wird eine Lösung aus 22,1 g Natriumsalz der N-(2-Aminoethyl)-2-aminoethansulfonsäure und 14,4 g 6-Aminohexansäure in 90 g Wasser unter kräftigem Rühren gegeben. Nach 30 Minuten wird durch Zugabe von 900 g Wasser dispergiert. Nach destillativer Abtrennung des Acetons erhält man eine lösemittelfreie, wässrige Polyurethan-Polyharnstoff-Dispersion mit einen Feststoffgehalt von 47 Gew.-% und einer mittlere Teilchengröße der dispersen Phase, ermittelt durch Laserkorrelation, von 254 nm erhalten. Der pH-Wert ist 6,2. Die Menge der endständigen, für eine Vernetzung zur Verfügung stehenden Carboxylgruppen, definiert durch die rechnerisch ermittelte Säurezahl = 7,4 mg KOH/g Substanz (bezogen auf 100% Feststoffgehalt der Dispersion).

### Beispiel 7

803 g Polyester I werden 1 Stunde bei 110°C und 15 mbar entwässert, anschließend werden 3 g Trimethylolpropan zugegeben. Bei 60°C werden 61,7 g Desmodur^{®} H und 56,6 g Desmodur I zugegeben. Die Mischung wird bei 80 bis 90°C gerührt, bis ein Isocyanatgehalt von 2,1 % erreicht ist. Das Reaktionsgemisch wird in 1400 g Aceton gelöst und dabei auf 50°C abgekühlt. In die homogene Lösung wird eine Lösung aus 22,6 g Natriumsalz der N-(2-Aminoethyl)-2-aminoethansulfonsäure und 19,2 g 6-Aminohexansäure in 85 g Wasser unter kräftigem Rühren gegeben. Nach 30 Minuten wird durch Zugabe von 1000 g Wasser dispergiert. Nach destillativer Abtrennung des Acetons erhält man eine lösemittelfreie, wässrige Polyurethan-Polyharnstoff-Dispersion mit einen Feststoffgehalt von 52 Gew.-% und einer mittlere Teilchengröße der dispersen Phase, ermittelt durch Laserkorrelation, von 550 nm erhalten. Der pH-Wert ist 5,9. Die Menge der endständigen, für eine Vernetzung zur Verfügung stehenden Carboxylgruppen, definiert durch die rechnerisch ermittelte Säurezahl = 8,4 mg KOH/g Substanz (bezogen auf 100% Feststoffgehalt der Dispersion).

### Beispiel 8

765 g Polyester I und 72 Polyester II werden 1 Stunde bei 110°C und 15 mbar entwässert, dann werden 3,5 g 1,4-Butandiol zugegeben und unter Rühren abgekühlt. Bei 60°C werden 65,7 g Desmodur^{®} H und anschließend 45,3 g Desmodur^{®} I zugegeben. Die Mischung wird bei 80 bis 90°C gerührt, bis ein Isocyanatgehalt von 1,3 % erreicht ist. Das Reaktionsgemisch wird in 1420 g Aceton gelöst und dabei auf 50°C abgekühlt. In die homogene Lösung wird eine Lösung aus 16 g Natriumsalz der N-(2-Aminoethyl)-2-aminoethansulfonsäure und 10 g 6-Aminohexansäure in 75 g Wasser unter kräftigem Rühren gegeben. Nach 30 Minuten wird durch Zugabe von 830 g Wasser dispergiert. Nach destillativer Abtrennung des Acetons erhält man eine lösemittelfreie, wässrige Polyurethan-Polyharnstoff-Dispersion mit einen Feststoffgehalt von 49 Gew.-% und einer mittlere Teilchengröße der dispersen Phase, ermittelt durch Laserkorrelation, von 226 nm erhalten. Der pH-Wert ist 6,2. Die Menge der endständigen, für eine Vernetzung zur Verfügung stehenden Carboxylgruppen, definiert durch die rechnerisch ermittelte Säurezahl = 4,4 mg KOH/g Substanz (bezogen auf 100% Feststoffgehalt der Dispersion).

### Beispiel 9

840 g Polyester I werden 1 Stunde bei 110°C und 15 mbar entwässert und dann unter Rühren abgekühlt. Bei 60°C werden 56,2 g Desmodur^{®} H und anschließend 37,5 g Desmodur^{®} I zugegeben. Die Mischung wird bei 80 bis 90°C gerührt, bis ein Isocyanatgehalt von 1,3 % erreicht ist. Das Reaktionsgemisch wird in 1390 g Aceton gelöst und dabei auf 50°C abgekühlt. In die homogene Lösung wird eine Lösung aus 14 g Natriumsalz der N-(2-Aminoethyl)-2-aminoethansulfonsäure und 7,9 g 6-Aminohexansäure in 75 g Wasser unter kräftigem Rühren gegeben. Nach 30 Minuten wird durch Zugabe von 850 g Wasser dispergiert. Nach destillativer Abtrennung des Acetons erhält man eine lösemittelfreie, wässrige Polyurethan-Polyharnstoff-Dispersion mit einen Feststoffgehalt von 47 Gew.-% und einer mittlere Teilchengröße der dispersen Phase, ermittelt durch Laserkorrelation, von 184 nm erhalten. Der pH-Wert ist 6,3. Die Menge der endständigen, für eine Vernetzung zur Verfügung stehenden Carboxylgruppen, definiert durch die rechnerisch ermittelte Säurezahl = 3,5 mg KOH/g Substanz (bezogen auf 100% Feststoffgehalt der Dispersion).

### Ermittlung der anwendungstechnischen Eigenschaften:

### Herstellung der Klebstoff-Dispersionen:

100 Gew. Teile der Dispersionen (Beispiele 1 bis 9) werden vorgelegt und unter Rühren mit 5 Gew. Teilen bzw. 10 Gew. Teilen Carbodiimid A) versetzt. Zu Vergleichszwecken wurden einige der Dispersionen auch ohne Carbodiimid getestet.

### Bestimmung der Schälfestigkeiten (Verbundfestigkeiten)

Die Bestimmung der Schälfestigkeiten erfolgt an den folgenden Verbundkombinationen::

| | | |
|---|---|---|
| Verbund A: | Substrat 1: Leder | Substrat 2: Leder |
| Verbund B: | Substrat 1: Canvas | Substrat 2: Canvas |
| Verbund C: | Substrat 1: PVC (30%*) | Substrat 2: PVC (30%*) |

| | | |
|---|---|---|
| *: Weichmachergehalt 30% | | |

### Herstellung der Proben und Durchführung der Prüfung:

Die Klebstoff-Dispersionen werden zunächst mittels Pinsel dünn auf 3 cm breite und 25 cm lange Substratstreifen auftragen und im Normklima (23°C / 50% r.h.) über 1 Std. getrocknet. Nach dem Trocknen werden die Klebstoffbeschichtungen mit dem IR-Strahler der Fa. Funck (Schockaktiviergerät 2000) wärmeaktiviert, wobei die Dauer der Wärmeaktivierung von dem verwendeten Substrat abhängt und für den Verbund A 7 sec., für den Verbund B 3,5 sec. und für den Verbund C 10 sec. beträgt. In allen Fällen liegt die max. Oberflächentemperatur der wärmeaktivierten Klebstoffschichten bei ca. 90°C.

Nach der Wärmeaktivierung werden die mit Klebstoff beschichteten Seiten der Substrate übereinander gelegt und mit einem Druck von 4 bar über 1 min. in einer hydraulischen Presse verpresst. Direkt nach dem Öffnen der Presse sowie nach 3 Tagen Lagerung im Normklima (23°C / 50% r.h.) werden die Schälfestigkeiten der Klebverbindungen mit der Universalprüfmaschine der Fa. Franck im T-Schälversuch bei einer Abzugsgeschwindigkeit von 100mm/min. ermittelt.

### Bestimmung der Wärmebeständigkeit

### Bestimmung der Wärmebeständigkeit durch den Softening Point (= Scherbelastung):

### Herstellung der Prüfkörper und Prüfung

Die Bestimmung der Softening Point-Werte erfolgte an folgenden Verbundkombinationen:

| | | |
|---|---|---|
| Verbund D: | Substrat 1: PVC (30%*) | Substrat 2: PVC (30%*) |
| Verbund E: | Substrat 1: Canvas | Substrat 2: Canvas |

| | | |
|---|---|---|
| *: Weichmachergehalt 30% | | |

Die Prüfkörper (25 mm x 50 mm) werden unmittelbar vor dem Klebstoffauftrag mit Ethylacetat abgewaschen und getrocknet. Die Klebstoffdispersionen werden dann mit einem Pinsel auf die 20 mm x 10 mm große Klebeflächen aufgetragen. Die Klebstoffschicht wird 60 min. bei 23°C / 50% rel. Feuchte getrocknet.

Die mit Klebstoff beschichteten Prüfkörper werden 10 sec. mit dem IR-Strahler der Fa. Funck (Schockaktiviergerät 2000) wärmeaktiviert. Die Temperatur der Oberfläche der PVC-Prüfkörper steigt dabei auf ca. 90°C an. Die Herstellung der Klebeverbindung erfolgt unmittelbar nach der Wärmeaktivierung, indem die aktivierten Klebstoffschichten gegeneinander 1 min. in einer Presse bei 4 bar verpresst werden. Die so hergestellten Prüfkörper werden 1 Woche im Normklima (23°C / 50% rel. Feuchte) gelagert.

Nach der Lagerung werden die Prüfkörper mit 4 kg belastet und in einem Heizschrank innerhalb von 30 min. auf 40°C temperiert. Anschließend werden die Prüfkörper mit einer linearen Heizrate von 0,5K/min. auf 150°C aufgeheizt. Die Erweichungstemperatur, d.h. die Temperatur in °C bei der die Klebeverbindung unter der Last von 4 kg versagt, wird registriert.

### Bestimmung der Wärmeschälfestigkeit nach Verklebung im Heißpreßverfahren (= Wärmestand)

### Herstellung der Prüfkörper und Prüfung

Die Klebstoff-Dispersionen werden auf gehobelte Buchenholzplatten (Abmessung 50 mm x 140 mm x 4 mm) mit einem Rillenrakel (100µm) einseitig aufgetragen. Die Klebefläche beträgt 50 mm x 110 mm. Nach der Trocknungszeit von 60 min. bei 23°C / 50% rel. Feuchte wird eine PVC-Möbeldekorfolie (Hersteller Fa. Rhenolit) auf die getrockneten Klebstoffschicht aufgelegt und in einer auf 103°C beheizten Membranpresse über 10 sec. bei 4 bar verpresst. Unter diesem Bedingungen liegt die max. Klebfugentemperatur bei 90°C. (Verbund F)

Die Prüfkörper werden 3 Tage im Normklima (23°C / 50% rel. Feuchte) gelagert. Der Wärmestand wird in einem Universal Wärmeschrank mit automatischer Temperaturregelung bestimmt. Dazu werden die nicht verklebten Enden der Buchenholzprüfkörper mit Flügelschrauben an einer Halterung befestigt. Das überstehende Ende des PVC-Streifens wird im Winkel von 180° senkrecht nach unten mit einem 500 g Gewicht belastet. Die Starttemperatur beträgt 50°C. Jeweils nach 1 Std. wird die Temperatur automatisch um 10°C erhöht bis es zur vollständigen Ablösung (bzw. Abriss) des PVC-Streifens vom Buchenholzprüfkörper kommt. Die Endtemperatur der Methode beträgt 120°C.

### Folgende Klebstoff-Formulierungen werden hergestellt:

| Klebstoff- Formulierung Nr. | 100 Gew. Teile PUD | Gew. Teile Carbodiimid A) |
|---|---|---|
| 1 a | Beispiel 1 | 5 |
| 1b | Beispiel 1 | 10 |
| 2 | Beispiel 2 | 0 |
| 2a | Beispiel 2 | 5 |
| 2b | Beispiel 2 | 10 |
| 3a | Beispiel 3 | 5 |
| 3b | Beispiel 3 | 10 |
| 4 | Beispiel 4 | 0 |
| 4a | Beispiel 4 | 5 |
| 4b | Beispiel 4 | 10 |
| 5a | Beispiel 5 | 5 |
| 5b | Beispiel 5 | 10 |
| 6 | Beispiel 6 | 0 |
| 6a | Beispiel 6 | 5 |
| 6b | Beispiel 6 | 10 |
| 7 | Beispiel 7 | 0 |
| 7a | Beispiel 7 | 5 |
| 7b | Beispiel 7 | 10 |
| 8 | Beispiel 8 | 0 |
| 8a | Beispiel 8 | 5 |
| 8b | Beispiel 8 | 10 |
| 9 | Beispiel 9 | 0 |
| 9a | Beispiel 9 | 5 |
| 9b | Beispiel 9 | 10 |

| | | |
|---|---|---|
| Verbund A: | Substrat 1: Leder | Substrat 2: Leder |
| Verbund B: | Substrat 1: Canvas | Substrat 2: Canvas |
| Verbund C: | Substrat 1: PVC (30%*) | Substrat 2: PVC (30%*) |
| Verbund D: | Substrat 1: PVC (30%*) | Substrat 2: PVC (30%*) |
| Verbund E: | Substrat 1: Canvas | Substrat 2: Canvas |
| Verbund F: | Buchenholz / Hart-PVC-Folie | |

| | | |
|---|---|---|
| *: Weichmachergehalt 30% | | |

### Folgende Prüfwerte wurden erhalten:

| | Schälfestigkeit | | | | | | Wärmebeständigkeit [°C] | | |
|---|---|---|---|---|---|---|---|---|---|
| | [N/mm] | | | | | | | | |
| | sofort | | | nach 3 Tagen | | | Softening point | | Wärmestand |
| Verbund | A | B | C | A | B | C | D | E | F |
| Klebstoff | | | | | | | | | |
| 1a | 3,7 | 3,3 | 1,6 | 4,2 | 5,2 | 11,2 | 106 | > 150 | 120 |
| 1b | 4 | 1,7 | 1,2 | 5,9 | 3,4 | 7,7 | 88 | > 150 | > 120 |
| 2 | 3,4 | 3,8 | 1,4 | 5,5 | 4,6 | 4,2 | 53 | 64 | 90 |
| 2a | 3,2 | 2,3 | 1,7 | 3,8 | 4,4 | 9,3 | 106 | 129 | > 120 |
| 2b | 3,1 | 1,1 | 1,5 | 3,8 | 3,3 | 8,4 | 106 | > 150 | > 120 |
| 3a | 3,8 | 2 | 1,4 | 4,8 | 4,5 | 11,4 | 87 | > 150 | > 120 |
| 3b | 3,3 | 3,1 | 1,1 | 3,5 | 4,4 | 6,6 | 96 | > 150 | > 120 |
| 4 | 1,8 | 2,9 | 1,8 | 1,3 | 5,9 | 6,5 | 49 | 56 | 110 |
| 4a | 2,7 | 2,6 | 2 | 3,6 | 4,5 | 10,8 | 84 | > 150 | > 120 |
| 4b | 2,5 | 1,3 | 1,6 | 3,8 | 3,4 | 8,9 | 103 | > 150 | > 120 |
| 5a | 2,5 | 4,2 | 3,7 | 4,4 | 4,8 | 16,5 | 69 | 83 | 90 |
| 5b | 3,7 | 4,2 | 3,5 | 6,2 | 5,3 | 14,5 | 106 | 145 | 100 |
| 6 | 1,8 | 4,7 | 1,2 | 1,7 | 1,5 | 2 | 20 | 20 | 50 |
| 6a | 2,3 | 2,2 | 1,5 | 2,6 | 2,2 | 3,4 | 47 | 46 | 60 |
| 6b | 2,6 | 2,2 | 2,1 | 2,8 | 3 | 5,2 | 65 | 80 | 80 |
| 7 | 1,8 | 4,7 | 1,2 | 1,4 | 4,6 | 2,4 | 54 | 59 | 70 |
| 7a | 2,6 | 3,4 | 2,4 | 3,3 | 4,4 | 6,5 | 81 | 139 | 100 |
| 7b | 2,6 | 3,2 | 2,9 | 3,4 | 3,1 | 12,6 | 112 | 122 | 120 |
| 8 | 2,1 | 2,1 | 2,0 | 2,4 | 4,4 | 4,1 | 55 | 59 | 70 |
| 8a | 2,4 | 4,4 | 4,2 | 1,9 | 4,1 | 15,9 | 77 | 140 | 100 |
| 8b | 2,1 | 4,1 | 4,5 | 2,1 | 4,1 | 16,2 | 107 | 142 | 120 |
| 9 | 2,3 | 3,6 | 2,1 | 2,1 | 2,9 | 6,7 | 57 | 62 | 80 |
| 9a | 2,4 | 3,7 | 5,2 | 2,3 | 4,3 | 15,4 | 81 | 143 | 110 |
| 9b | 3,2 | 4,1 | 4,1 | 3,8 | 3,5 | 16,1 | 107 | 141 | > 120 |

Die Werte zeigen eindeutig die sehr gute Vernetzung der Dispersionspolymeren. Die zugesetzten Mengen von 5 bzw. 10% Carbodiimidvernetzer führen in allen Fällen zu deutlich verbesserten Schälfestigkeiten und Wärmebeständigkeiten der Verklebungen.

Die Klebewerte liegen insgesamt auf einem sehr hohen Niveau. Die erfindungsgemäßen Bindemittel bzw. Bindemittelkombinationen ermöglichen die Herstellung hochwertiger Verklebungen.

Durch Auswahl einer optimalen Vernetzermenge können die Verklebungen je nach Anforderung in Bezug auf besonders hohe Schälfestigkeit oder auch in Bezug auf besonders hohen Wärmestand optimiert werden.

Die Klebewerte liegen auf gleichem Niveau wie ein die Klebewerte eines mit Polyisocyanat vernetzten Dispersionspolymers.

### Vergleichsbeispiel 10

430 g Polyester I werden 1 Stunde bei 110°C und 15 mbar entwässert. Bei 60°C werden 30,7 g Desmodur^{®} H und 22,6 g Desmodur^{®} I zugegeben. Die Mischung wird bei 80 bis 90°C gerührt, bis ein Isocyanatgehalt von 1,6 % erreicht ist. Das Reaktionsgemisch wird in 980 g Aceton gelöst und dabei auf 50°C abgekühlt. In die homogene Lösung wird eine Lösung aus 6,4 g Natriumsalz der N-(2-Aminoethyl)-2-aminoethansulfonsäure und 10,2g eines Umestzungsproduktes im Sinne einer Michaeladdition aus 1 Mol Isophorondiamin und 1,8 Mol Acrylsäure [MG 297 g/Mol; diaminofunktionell; SZ =101 mg KOH/G Substanz] in 46 g Wasser und 46 g Aceton unter kräftigem Rühren gegeben. Nach 30 Minuten wird durch Zugabe von 560 g Wasser dispergiert. Nach destillativer Abtrennung des Acetons werden 5,1 g Emulgator FD® zugesetzt. Es wird eine lösemittelfreie, wässrige Polyurethan-Polyharnstoff-Dispersion mit einen Feststoffgehalt von 46 Gew.-% und einer mittlere Teilchengröße der dispersen Phase, ermittelt durch Laserkorrelation, von 320 nm erhalten. Der pH-Wert ist 5,0. Die Menge der **seitenständigen,** für eine potentielle Vernetzung zur Verfügung stehenden Carboxylgruppen, definiert durch die rechnerisch ermittelte Säurezahl = 6,8 mg KOH/g Substanz (bezogen auf 100% Feststoffgehalt der Dispersion).

### Vergleichsbeispiel 11

540 g Polyester I und 51 g Polyester II werden 1 Stunde bei 110°C und 15 mbar entwässert und dann mit 12 g Dimethylolpropionsäure versetzt. Bei 60°C werden 54,8 g Desmodur^{®} H und 36,2 g Desmodur^{®} I zugegeben. Die Mischung wird bei 80 bis 90°C gerührt, bis ein Isocyanatgehalt von 1,5 % erreicht ist. Das Reaktionsgemisch wird in 960 g Aceton gelöst und dabei auf 50°C abgekühlt. In die homogene Lösung wird eine Lösung aus 8,0 g Natriumsalz der N-(2-Aminoethyl)-2-aminoethansulfonsäure und 2,4 g Diethylamin in 195 g Wasser unter kräftigem Rühren gegeben. Nach 30 Minuten wird durch Zugabe von 500 g Wasser dispergiert. Nach destillativer Abtrennung des Acetons wird eine lösemittelfreie, wässrige Polyurethan-Polyharnstoff-Dispersion mit einen Feststoffgehalt von 50 Gew.-% und einer mittlere Teilchengröße der dispersen Phase, ermittelt durch Laserkorrelation, von 280 nm erhalten. Der pH-Wert ist 6,6. Die Menge der **seitenständigen,** für eine potentielle Vernetzung zur Verfügung stehenden Carboxylgruppen, definiert durch die rechnerisch ermittelte Säurezahl = 7,1 mg KOH/g Substanz (bezogen auf 100% Feststoffgehalt der Dispersion).

Wie oben beschrieben wird die Wärmebeständigkeit durch Ermittlung des Softening point bestimmt. Die Herstellung der Prüfkörper und die Prüfung erfolgt gemäß dem oben beschriebenen Verbund D (PVC). Dabei werden die Vergleichs-Dispersionen 10) und 11) einmal ohne Vernetzer und einmal mit 5 Teilen Carbodiimid A) kombiniert aufgetragen.Diese Prüfung ist ein sehr gutes Maß für die Vernetzungsreaktion. Erfolgt keine Vernetzung, so erhält man auch keine Erhöhung des Softening point und somit insgesamt unzureichende Klebeeigenschaften.

Folgendes Ergebnis wird erhalten:
100 T Vergleichs-Dispersion 10) ohne Vernetzer: Softening point = 50°C
100 T Vergleichs-Dispersion 10) + 5 Teile Carbodiimid A): Softening point = 52°C
100 T Vergleichs-Dispersion 11) ohne Vernetzer: Softening point = 52°C
100 T Vergleichs-Dispersion 11) + 5 Teile Carbodiimid A): Softening point = 52°

Der Softening point der Vergleichs-Dispersionen ohne Vernetzer liegt im gleichen Bereich wie der Softening point der erfindungsgemäßen Dispersionen ohne Vernetzer. Im Gegensatz zu den erfindungsgemäßen Dispersionen ergibt der Zusatz des Vernetzers zu den Vergleichs-Dispersionen jedoch praktisch keinen Anstieg des Softening points, es findet keine Vernetzung mit den seitenständigen Carboxylgruppen der Vergleichs-Dispersion statt. Im Gegensatz dazu zeigen die erfindungsgemäßen Dispersionen 1) bis 9) einen deutlichen Anstieg des Softening points nach Zugabe eines Vernetzers, die gewünschte Vernetzungsreaktion findet statt.

### Prüfung des Potlifes/ der Verarbeitungszeit der erfindungsgemäßen Bindemittel-Kombinationen

### Klebstoff-Formulierungen:

| | |
|---|---|
| Nr. | Bindemittel-Kombination |
| 1b, frische Mischung | 100 Teile Dispersion Bsp.1 + 10 Teile Carbodiimidvernetzer A) |
| 1b, Mischung 1 Monat alt | 100 Teile Dispersion Bsp.1 + 10 Teile Carbodümidvernetzer A) |
| 1b, Mischung 2 Monate alt | 100 Teile Dispersion Bsp.1 + 10 Teile Carbodiimidvernetzer A) |

| | | |
|---|---|---|
| Verbund A: | Substrat 1: Leder | Substrat 2: Leder |
| Verbund B: | Substrat 1: Canvas | Substrat 2: Canvas |
| Verbund C: | Substrat 1: PVC (30%*) | Substrat 2: PVC (30%*) |
| Verbund D: | Substrat 1: PVC (30%*) | Substrat 2: PVC (30%*) |
| Verbund E: | Substrat 1: Canvas | Substrat 2: Canvas |
| Verbund F: | Buchenholz / Hart-PVC-Folie | |

| | | |
|---|---|---|
| *: Weichmachergehalt 30% | | |

| | **Schälfestigkeit** | | | | | | **Wärmebeständigkeit [°C]** | | |
|---|---|---|---|---|---|---|---|---|---|
| | **[N/mm]** | | | | | | | | |
| | **sofort** | | | **nach 3 Tagen** | | | **Softening point** | | **Wärmestand** |
| **Verbund** | **A** | **B** | **C** | **A** | **B** | **C** | **D** | **E** | **F** |
| **Klebstoff-Formulierung** | | | | | | | | | |
| 1b, frische Mischung | 4 | 1,7 | 1,2 | 5,9 | 3,4 | 7,7 | 88 | >150 | >120 |
| 1b, Mischung 1 Monat alt | 2,2 | 3,2 | 1,9 | 1,3 | 5,2 | 10,3 | 106 | > 150 | 110 |
| 1b, Mischung 2 Monate alt | 3 | 3,2 | 2,6 | 4,3 | 4,4 | 12,8 | 100 | 146 | 110 |

Sowohl die Klebstoff-Formulierung die 1 Monat alt ist, als auch die Klebstoff-Formulierung die 2 Monate alt ist, zeigt nach Applikation noch exzellente Klebeeigenschaften.

Damit ermöglichen die erfindungsgemäßen Bindemittel-Kombinationen die Herstellung von Klebstoffen, insbesondere von thermoaktivierbaren Klebstoffen, die das Eigenschaftsniveau von 2 Komponenten Klebstoffen, die üblicherweise ein Potlife von einigen wenigen Stunden aufweisen, erreichen, und dabei gleichzeitig durch ihr sehr langes Potlife in Ihrer Handhabung mit 1 Komponenten Klebstoffen vergleichbar sind. Damit ist ein bisher nicht gekanntes exzellentes Eigenschaftsniveau erreicht worden.

## Patentansprüche

1. Wässrige Polyurethan- bzw. Polyurethan-Harnstoff-Dispersionen umfassend darin dispergierte Polyurethane bzw. Polyurethan-Polyharnstoffe mit endständigen Carboxylgruppen und zusätzlich seitenständigen Sulphonat- und/oder Carboxylatgruppen.

2. Wässrige Polyurethan- bzw. Polyurethan-Harnstoff-Dispersionen gemäß Anspruch 1, **dadurch gekennzeichnet, dass** die darin dispergierten Polyurethane bzw. Polyurethan-Polyharnstoffe neben den endständigen Carboxylgruppen zusätzlich Sulphonatgruppen umfassen, welche zu mindestens 70 mol% seitenständig sind.

3. Wässrige Polyurethan- bzw. Polyurethan-Harnstoff-Dispersionen gemäß Anspruch 1, **dadurch gekennzeichnet, dass** die darin dispergierten Polyurethane bzw. Polyurethan-Polyharnstoffe neben den endständigen Carboxylgruppen zusätzlich Carboxylatgruppen umfassen, welche zu mindestens 50 % seitenständig sind

4. Wässrige Polyurethan- bzw. Polyurethan-Harnstoff-Dispersionen gemäß Anspruch 1, **dadurch gekennzeichnet, dass** die darin dispergierten Polyurethane bzw. Polyurethan-Polyharnstoffe neben den endständigen Carboxylgruppen zusätzlich Carboxylat- und Sulphonatgruppen umfassen, welche zu mindestens 50 % seitenständig sind

5. Wässrige Polyurethan- bzw. Polyurethan-Harnstoff-Dispersionen gemäß einem der Ansprüche 1 bis 4, **dadurch gekennzeichnet, dass** die in den wässrigen Polyurethan- bzw. Polyurethan-Harnstoff-Dispersionen enthaltenen Polyurethane bzw. Polyurethan-Polyharnstoffe Umsetzungsprodukte sind aus
a) mindestens einer Sulphonat- und/oder Carboxylatgruppen aufweisenden Komponente, welche außerdem zwei bzw. drei isocyanatreaktive Hydroxy- und/oder Aminogruppen aufweist und somit zu seitenständigen Sulphonat- bzw. Carboxylatstruktureinheiten führt,
b) mindestens einer Diol- und/oder Polyolkomponente,
c) mindestens einer Di- und/oder Polyisocyanatkomponente,
d) mindestens einer Aminocarbonsäure und/oder Hydroxycarbonsäure, wobei die Komponenten d) jeweils nur eine Hydroxyl- oder eine Aminogruppe aufweisen, und so endständige Carboxylgruppen erhalten werden,
e) ggf. mono-, di-, und/oder tri-amino- und/oder hydroxyfunktioneller Verbindungen und
f) ggf. sonstiger isocyanatreaktiver Verbindungen.

6. Wässrige Polyurethan- bzw. Polyurethan-Harnstoff-Dispersionen gemäß Anspruch 5, **dadurch gekennzeichnet, dass** Komponente a) dabei in Mengen von 0,5 bis 10 Gew.-%, Komponente b) in Mengen von 20 bis 94 Gew.-%, Komponente c) in Mengen von 5 bis 60 Gew.-%, Komponente d) in Mengen von 0,25 bis 10 Gew.-%, Komponente e) in Mengen von 0 bis 10 und Komponente f) in Mengen von 0 bis 20 Gew.-% bezogen auf die Polyurethane bzw. Polyurethan-Polyharnstoffe eingesetzt werden.

7. Wässrige Polyurethan- bzw. Polyurethan-Harnstoff-Dispersionen gemäß Anspruch 5 oder 6, **dadurch gekennzeichnet, dass** in Komponente a) Komponenten a) sind N-(2-Aminoethyl)-2-aminoethansulfonat oder Dimethylolpropionat eingesetzt wird.

8. Wässrige Polyurethan- bzw. Polyurethan-Harnstoff-Dispersionen gemäß einem der Ansprüche 5 bis 7, **dadurch gekennzeichnet, dass** in Komponente d).ausschließlich Aminocarbonsäuren eingesetzt werden.

9. Verfahren zur Herstellung von wässrigen Polyurethan- bzw. Polyurethan-Harnstoff-Dispersionen gemäß einem der Ansprüche 5 bis 8, **dadurch gekennzeichnet, dass** die Komponenten a), b), c) und ggf. f) in einer ein- oder mehrstufigen Reaktion zu einen isocyanatfunktionellen Prepolymeren umgesetzt werden, welches anschließend mit Komponente d) und ggf. e) in einer ein- oder zweistufigen Reaktion umgesetzt wird und dann in oder mit Wasser dispergiert wird, wobei ggf. mit verwendetes Lösemittel während oder nach der Dispergierung destillativ anteilig oder ganz entfernt werden kann.

10. Bindemittelkombinationen für Beschichtungsmittel-, Klebstoff- und/oder Dichtstoff-Anwendungen, enthaltend i) Polyurethan- bzw. Polyurethanharnstoff-Dispersionen gemäß einem der Ansprüche 1 bis 8.

11. Bindemittelkombinationen gemäß Anspruch 10, **dadurch gekennzeichnet, dass** diese neben Komponente i) als Komponente ii) ferner carboxylreaktive Gruppen enthaltende mindestens difunktionelle Vernetzer aus der Gruppe Carbodiimide, Aziridine und Epoxide umfassen.

12. Bindemittelkombinationen gemäß Anspruch 11, **dadurch gekennzeichnet, dass** diese neben 75 bis 99 Gew.-% Komponente i), 1 bis 25 Gew.-% mindestens einen Carbodiimidgruppen aufweisenden Vernetzer Komponente ii) enthalten.

13. Bindemittelkombination gemäß Anspruch 11 oder 12, **dadurch gekennzeichnet, dass** in Komponente ii) wässrige nichtionisch hydrophilierte, cycloaliphatische Carbodiimide mit einem Carbodiimidequivalentgewicht von ca.385 enthalten sind.

14. Verwendung der erfindungsgemäßen Bindemittelkombinationen gemäß einem der Ansprüche 11 bis 13 zum Verkleben und/oder Beschichten und/oder Lackieren beliebiger Substrate.

15. Substrate beschichtet oder verklebt unter Verwendung von Bindemittelkombinationen gemäß einem der Ansprüche 11 bis 13.
